# EUROPEAN PATENT APPLICATION

(11) **EP 2 966 548 A1**
(43) Date of publication of application: **13.01.2016**
(21) Application number: 15175583.2
(22) Date of filing: 07.07.2015
(51) Int. Cl.: G06F 3/041, G06Q 30/00

(54) **MULTIMEDIA DEVICE**

(30) Priority: 07.07.2014 IT TO20140540
(71) Applicant: ETT S.p.A., 16154 Genova (IT)
(72) Inventor: NOVELLINO, Antonio, 16148 Genova (IT); VENTRELLA, Matteo, 16014 Campomorone (Genova) (IT)
(74) Representative: Deambrogi, Edgardo

(57) **Abstract**

A multimedia device (1) is described containing an object (6), comprising:
- an external casing (2) having at least one side wall (2a) provided with at least one display screen (4) adapted to display multimedia content associated with the object (6);
- a plurality of proximity sensors (8), adapted to detect the presence of a user who is approaching the multimedia device (1);
- a presence sensor (11), adapted to detect the presence of a user who is positioned in front of the multimedia device (1); and
- a processing unit (10) connected to the proximity sensors, to the presence sensor (11) and to the display screen (4), which is arranged to receive from the proximity sensors signals representative of the approach of a user to the multimedia device and, from the presence sensor, signals representative of the presence of a user in front of the multimedia device, and, on the basis of these signals, to activate the display screen (4) in order for it to display the multimedia content;

in which said display screen (4) furthermore comprises a plurality of actuators adapted to detect a pressure exerted by the user on the display screen (4) and to modify the multimedia content displayed as a function of the area of the display screen (4) on which the pressure is exerted.

## Description

The present invention relates to a multimedia device.

Multimedia devices are known, such as for example interactive glass screens or windows, which allow a user positioned in front of them to view multimedia content. Typically, such devices are passive in that they show predefined multimedia content, displaying it to the user in cyclic mode.

These screens can constitute one side of a three-dimensional enclosure in the shape of a parallelepiped inside of which an object is placed: known projection and retro-projection systems are used on one of the sides of such enclosures in order to present the desired multimedia content.

The multimedia devices of the prior art have the drawback of not allowing the user any kind of interaction with the content that is being viewed.

The aim of the present invention is therefore to provide a multimedia device which allows a user to select the multimedia content that he/she wishes to view and to interact with it for the purpose of selecting more detailed views.

This and other objectives will be met with a multimedia device whose features are defined in Claim 1.

Particular embodiments form the subject of the dependent claims, whose content is intended to form an integral part of the present description.

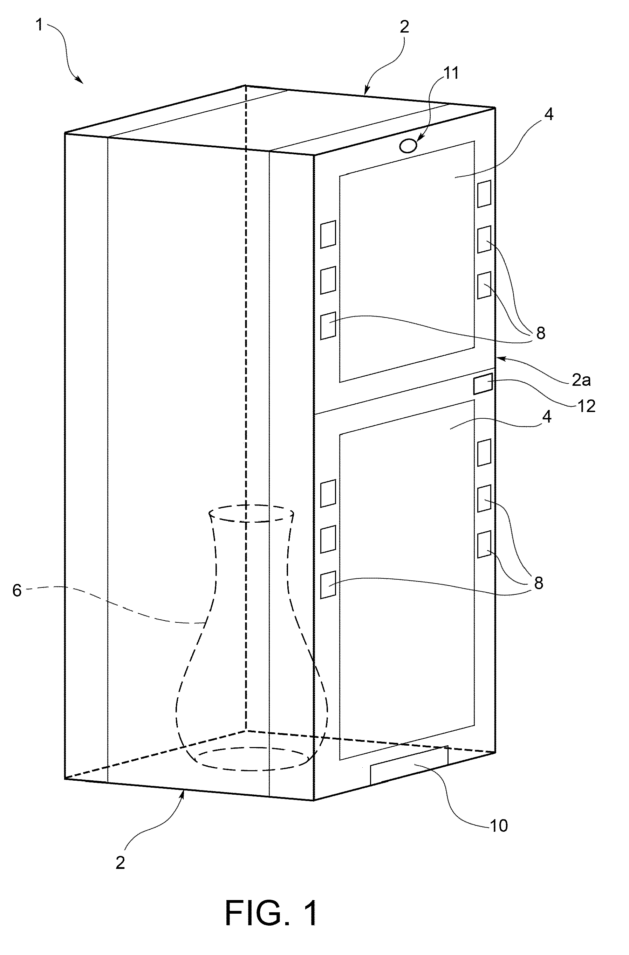

Further features and advantages of the invention will become apparent from the detailed description that follows, presented purely by way of non-limiting example, with reference to the appended drawing which shows a three-dimensional view of a device according to the invention.

In the figure a multimedia device, such an enclosure is indicated with 1.

The device 1 comprises an external casing 2, preferably in the shape of a parallelepiped, in which at least one of the side walls 2a is provided with at least one display screen 4 adapted to present multimedia content relating to an object 6 contained inside the device 1.

The display screen 4 comprises a monitor known per se (such as for example a glass screen) with which is associated an interactive layer (*layer multitouch*) which is also known per se.

The monitor is designed to present the multimedia content, and the interactive layer is adapted to detect a pressure exerted on it by a user.

The association monitor-interactive layer allows to cause the monitor to show a predetermined multimedia content based on the areas of said interactive layer touched by the user, as is better described in the following.

A plurality of proximity sensors 8, known per se, are arranged on the sides of the display screen 4. These sensors 8 are adapted to detect the presence of a user who is near to the device 1 or else to specifically identify the type of user who is approaching the device 1.

These sensors 8 are connected to a processing unit 10, preferably located at the base of the structure of the device 1, which is in turn connected to the display screen 4.

The processing unit 10 is configured to receive from the proximity sensors 8 signals representative of the approach of a user to the device 1 and to activate the display screen 4, in a manner known per se, in order for multimedia contents to be displayed.

Preferably, above the display screen 4 an optical presence sensor 11, known per se, is housed, which sensor is adapted to detect the presence of a user who is positioned in front of the multimedia device 1. In proximity to the display screen 4, a device for reading tags is furthermore preferably provided, such as a device for interrogation and reception of near-field communication signals 12, such as for example an NFC reader, known per se, whose positioning - according to a currently preferred exemplary embodiment - is suitably identified in the drawing. The NFC reader is adapted to decode the information stored in a transponder device in the possession of a user, for example a transponder device associated with an object in the possession of a user.

The processing unit 10 is arranged to receive from the optical presence sensor 11 a specific signal representative of the actual positioning of a user. This signal suitably encoded and processed, causes incrementing an *ad hoc* counter which allows the number of users who linger in front of the device 1 within a given interval of time to be precisely detected.

Preferably, upon the approach of a user, first multimedia content is displayed. Subsequently, this content is modified based on the pressure exerted by the user on the interactive layer of the display screen 4 (as described in the following).

The user positioned in front of the device 1 may also decide to approach an object equipped with a transponder, known per se, in front of the NFC reader 12. The reader acquires the information stored by the transponder, and this data is processed by the processing unit 10 which sends specific multimedia content to the display screen 4 pertaining to the object identified by the transponder.

The multimedia content is stored in a memory device known per se and not shown in the figure, and the display screen 4 presents this multimedia content in a manner known per se.

The interactive layer of the display screen 4 comprises, in a manner known per se, a plurality of actuators adapted to detect a pressure exerted by the user via his/her finger on the display screen 4 (in particular, on the interactive layer) and to modify the multimedia content displayed by the monitor as a function of the area of the display screen 4 on which the pressure is exerted.

In this way, the user can explore the multimedia content, representative of the history and of the information relating to the object 6, based on his/her own wishes.

The multimedia device of the present invention has several applications:
- in museums: inside of the multimedia device 1 is placed an exhibit and the device 1 allows the user to navigate in the multimedia content relating to the exhibit;
- retail: in the multimedia device 1 one or more products 6 to be purchased is/are inserted and the display screen 4 allows technical cards, promotional videos or product purchase services 6 to be accessed. Other products having a transponder can, furthermore, be brought towards the NFC reader 12 and the display screen 4 allows specific content to be accessed;
- tourist promotion points: in the multimedia device 1 typical local products 6 are placed and by means of the display screen 4 it is possible to access details of the products 6, videos, information cards, or to check the paths for reaching the producer or retailer of these products 6.

The device of the present invention furthermore offers the advantage of attracting the user offering him/her a new way of exploring the contents and the information associated with the objects 6 displayed.

The flexibility of the present solution furthermore allows content to be offered in various languages, further broadening the potential applications of the system itself.

Of course, while still maintaining the principle of the invention, the embodiments and the particular implementations will be able to be widely varied with respect to those that have been described and illustrated purely by way of non-limiting example, without however departing from the scope of protection of the present invention defined by the appended claims.

## Claims

1. Multimedia device (1) containing an object (6), comprising:
- an external casing (2) having at least one side wall (2a) provided with at least one display screen (4) adapted to display multimedia content associated with said object (6);
- a plurality of proximity sensors (8), adapted to detect the presence of a user who is approaching the multimedia device (1);
- a presence sensor (11), adapted to detect the presence of a user who is positioned in front of the multimedia device (1); and
- a processing unit (10) connected to said proximity sensors, to said presence sensor (11) and to the display screen (4), which is arranged to receive from said proximity sensors signals representative of the approach of a user to the multimedia device and, from said presence sensor, signals representative of the presence of a user in front of the multimedia device, and, on the basis of these signals, to activate the display screen (4) in order for it to display said multimedia content;
wherein said display screen (4) furthermore comprises a plurality of actuators adapted to detect a pressure exerted by the user on the display screen (4) and to modify the multimedia content displayed as a function of the area of the display screen (4) on which the pressure is exerted.

2. Device according to Claim 1, wherein said display screen (4) comprises a monitor adapted to display the multimedia content and an interactive layer adapted to detect a pressure exerted on it by the user.

3. Device according to Claim 1 or 2, wherein said processing unit (10) is arranged to increment a counter adapted to detect the number of users lingering in front of the device (1) within a predetermined interval of time as a function of said signal representative of the presence of a user in front of the multimedia device.

4. Device according to any one of the preceding claims, wherein said plurality of proximity sensors (8) is disposed on the sides of the display screen (4).

5. Device according to any one of the preceding claims, wherein said proximity sensors (8) are adapted to identify the type of user approaching the device (1).

6. Device according to any one of the preceding claims, wherein said presence sensor is an optical sensor (11) disposed above the display screen (4).

7. Device according to any one of the preceding claims, furthermore comprising a device for interrogation and reception of near-field communication signals (12), adapted to decode information stored on a transponder in the possession of a user.

8. Device according to Claim 7, wherein said device for interrogation and reception of near-field communication signals (12) is an NFC reader.

9. Device according to Claim 7 or 8, wherein said device for interrogation and reception of near-field communication signals (12) is arranged to acquire information stored by said transponder, and the processing unit (10) is arranged to process said information and to send to the display screen (4) specific multimedia content pertaining to an object with which said transponder is associated.

10. Device according to any one of the preceding claims, wherein the object (6) is a museum exhibit or a commercial product.
